(19) Europäisches Patentamt
European Patent Office
Office européen des brevets

(11) **EP 3 178 878 B1**

(12) # EUROPEAN PATENT SPECIFICATION

(45) Date of publication and mention of the grant of the patent:
**05.06.2019 Bulletin 2019/23**

(21) Application number: **15840313.9**

(22) Date of filing: **10.07.2015**

(51) Int Cl.:
***C08L 15/00*** *(2006.01)* ***B60C 1/00*** *(2006.01)*
***C08K 3/04*** *(2006.01)* ***C08K 3/36*** *(2006.01)*
***C08L 9/06*** *(2006.01)* ***C08C 19/02*** *(2006.01)*
***C08C 19/00*** *(2006.01)* ***C08L 7/00*** *(2006.01)*
*C08F 36/04 (2006.01)* *C08K 3/00 (2018.01)*
*C08K 3/02 (2006.01)*

(86) International application number:
**PCT/JP2015/069823**

(87) International publication number:
**WO 2016/039005 (17.03.2016 Gazette 2016/11)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**08.09.2014 JP 2014182385**
**08.09.2014 JP 2014182388**
**08.09.2014 JP 2014182389**
**08.09.2014 JP 2014182392**

(43) Date of publication of application:
**14.06.2017 Bulletin 2017/24**

(73) Proprietor: **Sumitomo Rubber Industries, Ltd.**
**Kobe-shi, Hyogo 651-0072 (JP)**

(72) Inventors:
- **YAMASHIRO, Yuhei**
**Kobe-shi**
**Hyogo 651-0072 (JP)**
- **TORITA, Kazuya**
**Kobe-shi**
**Hyogo 651-0072 (JP)**
- **KITAGO, Ryota**
**Kobe-shi**
**Hyogo 651-0072 (JP)**
- **ISHINO, Soh**
**Kobe-shi**
**Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 0 775 725**
**WO-A1-2014/126184**
**JP-A- 2003 277 560**
**JP-A- 2008 184 517**
**JP-A- 2011 153 219**
**JP-A- 2011 162 654**
**JP-A- 2012 102 239**
**US-A1- 2006 173 134**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 178 878 B1

## Description

TECHNICAL FIELD

The present invention relates to a pneumatic tire formed from a specific rubber composition.

BACKGROUND ART

With the recent increase in concern about environmental issues, the demand on automobiles for better fuel economy has been increasing. Higher fuel economy is also required of rubber compositions for automotive tires. For example, rubber compositions containing conjugated diene polymers such as polybutadiene or butadiene-styrene copolymers and filler such as carbon black or silica are used in automotive tires. For truck or bus tires, for example, rubber compositions containing isoprene-based rubbers in addition to the above components are used.

Patent Literature 1, for example, proposes a method for improving fuel economy by using a diene rubber (modified rubber) that has been modified with an organosilicon compound containing an amino group and an alkoxy group. Although fuel economy is improved by such conventional techniques, another important challenge from economic and safety standpoints is to sufficiently ensure abrasion resistance and tensile properties (rubber tensile strength). Regarding this issue, the conventional techniques unfortunately do not sufficiently provide abrasion resistance, which is in a trade-off relationship with fuel economy, and can also cause rubber chipping. There is still room for improvement in terms of rubber tensile strength and abrasion resistance.

In EP 0 775 725 A1 a rubber composition is disclosed which comprises (A) 100 parts by weight of a raw material rubber which contains not less than 30 % by weight of at least one partially hydrogenated rubber of a conjugated diene rubber, wherein 5 to 70 % of the unsaturated double bonds of the conjugated diene portion thereof have been hydrogenated; (B) 10 to 150 parts by weight of a silica; (C) 0.1 to 20 parts by weight of an organo-silane coupling agent; and (D) 0.1 to 10 parts by weight of a vulcanizing agent.

JP 2012 102239 A discloses a wet master batch which is obtained by mixing a rubber latex, a filler dispersion liquid and a liquid dienoic polymer emulsion, and has a hydrogenation rate of double bonds of conjugated diene moieties of the liquid dienoic polymer of 50 to 90 mol%.

In JP 2011 162654 A a rubber composition for tires is disclosed which a five-membered heterocyclic compound, a protonic acid and/or a phenol derivative, and a styrene butadiene copolymer having a number-average molecular weight of $1.0\times10^3$-$1.0\times10^5$, and a styrene content of ≤30 mass%.

A rubber component is disclosed in JP 2011 153219 which contains a styrene butadiene rubber, zinc oxide having an average primary particle size of 200 nm or less, and liquid styrene butadiene having a weight average molecular weight of 1000 to 5000.

US2006173134 discloses a rubber composition comprising as a rubber component (A) an aromatic vinyl compound-conjugated diene compound copolymer polymerized with a lithium-based polymerization initiator and having a polystyrene-conversion weight average molecular weight of $3.0*10^5$ -$3.0*10^6$ as measured by a gel permeation chromatography and (B) 10-200 parts by mass, based on 100 parts by mass of the copolymer (A), of a hydrogenated styrene-butadiene copolymer having a polystyrene-conversion weight average molecular weight of $5.0*10^3$ -$2.0*10^5$ as measured by a gel permeation chromatography and a bound styrene content of 10-70 mass % in which 25-50% of double bonds in butadiene portion is hydrogenated.

CITATION LIST

PATENT LITERATURE

Patent Literature 1: JP 2000-344955 A

SUMMARY OF INVENTION

TECHNICAL PROBLEM

The present invention aims to solve the above problems and provide a pneumatic tire having well-improved rubber tensile strength and abrasion resistance while maintaining or improving good fuel economy.

SOLUTION TO PROBLEM

The present invention relates to a pneumatic tire, formed from a rubber composition according to claim 1. The

rubber composition contains: a hydrogenated copolymer obtained by copolymerization of an aromatic vinyl compound and a conjugated diene compound, the hydrogenated copolymer having a degree of hydrogenation of the conjugated diene units of 75 mol% or more; carbon black; and silica, the rubber composition containing, per 100% by mass of a rubber component, 75% by mass or more of the hydrogenated copolymer, the rubber composition containing, relative to 100 parts by mass of the rubber component, 3 parts by mass or more of the carbon black and 1 to 200 parts by mass of the silica.

The hydrogenated copolymer has a weight average molecular weight of 200,000 to 2,000,000.

The hydrogenated copolymer has a degree of hydrogenation of 90 mol% or more.

The hydrogenated copolymer is a hydrogenated styrene-butadiene copolymer.

The hydrogenated styrene-butadiene copolymer is preferably a hydrogenated modified styrene-butadiene copolymer.

The hydrogenated styrene-butadiene copolymer has a styrene content of 5% to 40% by mass.

The hydrogenated styrene-butadiene copolymer is preferably present in an amount of 90% to 100% by mass per 100% by mass of the rubber component.

Preferably, the silica is present in an amount of 10 to 80 parts by mass relative to 100 parts by mass of the rubber component, and the carbon black is present in an amount of 50% by mass or more per 100% by mass of the total filler.

The rubber composition may have a tan $\delta$ peak temperature of lower than -16°C or of -16°C or higher. The rubber composition having a tan $\delta$ peak temperature of lower than -16°C is advantageous when the pneumatic tire of the present invention is used as a studless winter tire or an all-season tire. The rubber composition having a tan $\delta$ peak temperature of -16°C or higher is advantageous when the pneumatic tire of the present invention is used as a summer tire.

The pneumatic tire of the present invention is preferably a truck or bus tire, a studless winter tire, an all-season tire, or a summer tire, each including a tread formed from the rubber composition.

## ADVANTAGEOUS EFFECTS OF INVENTION

The pneumatic tire of the present invention is formed from a rubber composition which contains, per 100% by mass of the rubber component, 75% by mass or more of a specific hydrogenated copolymer having a degree of hydrogenation of 75 mol% or more, and further contains, relative to 100 parts by mass of the rubber component, 3 parts by mass or more of carbon black and 1 to 200 parts by mass of silica. Such a pneumatic tire has good fuel economy, good rubber tensile strength, and good abrasion resistance.

## DESCRIPTION OF EMBODIMENTS

The pneumatic tire of the present invention is formed from a rubber composition. The rubber composition contains, per 100% by mass of the rubber component, 75% by mass or more of a hydrogenated copolymer obtained by copolymerizing an aromatic vinyl compound and a conjugated diene compound to produce a copolymer (hereinafter, also referred to as a copolymer of an aromatic vinyl compound and a conjugated diene compound), and hydrogenating the conjugated diene units of the copolymer to give a degree of hydrogenation of 75 mol% or more. The rubber composition further contains, relative to 100 parts by mass of the rubber component, 3 parts by mass or more of carbon black and 1 to 200 parts by mass of silica.

The rubber composition in the present invention contains, per 100% by mass of the rubber component, 75% by mass or more of a hydrogenated copolymer obtained by hydrogenating the conjugated diene units of a copolymer of an aromatic vinyl compound and a conjugated diene compound to give a degree of hydrogenation of 75 mol% or more, and further contains, relative to 100 parts by mass of the rubber component, 3 parts by mass or more of carbon black and 1 to 200 parts by mass of silica. With such a rubber composition, rubber tensile strength and abrasion resistance can be well improved while maintaining or improving good fuel economy, and good ozone resistance and good conductivity can also be obtained.

The rubber composition in the present invention is characterized by containing, in the rubber component, a hydrogenated copolymer obtained by hydrogenating the conjugated diene units of a copolymer of an aromatic vinyl compound and a conjugated diene compound. Since conventional rubbers contain a large number of double bonds at which a crosslinking reaction can take place, they will have variations in crosslink concentration which are considered to cause stress concentration that can initiate fracture. According to the present invention, the hydrogenation treatment reduces the number of double bonds, thereby reducing the number of reactive sites for crosslinking. As a result, it is expected that the variations in crosslink concentration decrease so that the stress concentration is relaxed, resulting in improvements in abrasion resistance and other properties.

The copolymer of an aromatic vinyl compound and a conjugated diene compound is a copolymer of styrene and 1,3-butadiene (styrene-butadiene copolymer). The hydrogenated copolymer is thus a hydrogenated styrene-butadiene copolymer. Furthermore, the hydrogenated styrene-butadiene copolymer is preferably a hydrogenated modified styrene-butadiene copolymer that has been modified as described later.

The styrene-butadiene copolymer may be produced by copolymerization of styrene and 1, 3-butadiene in any order, and may be produced by random copolymerization or block copolymerization, and preferably by random copolymerization. The same is true for copolymers of aromatic vinyl compounds and conjugated diene compounds other than styrene-butadiene copolymers.

The degree of hydrogenation of the hydrogenated copolymer (the degree of hydrogenation of the conjugated diene units of the copolymer of an aromatic vinyl compound and a conjugated diene compound) is 90 mol% or more, more preferably 93 mol% or more. When the degree of hydrogenation is less than 75 mol%, rubber tensile strength and abrasion resistance are not readily improved. The degree of hydrogenation of the hydrogenated copolymer is also preferably 99 mol% or less, more preferably 98 mol% or less. When the degree of hydrogenation is more than 99 mol%, the rubber composition may become hard.

The degree of hydrogenation can be calculated from the rate of decrease in the intensity of a $^1$H-NMR spectrum corresponding to unsaturated bonds.

The hydrogenated copolymer has a weight average molecular weight (Mw) of 200,000 or more, more preferably 400,000 or more. When the Mw is less than 200,000, good rubber tensile strength and good abrasion resistance may not be obtained. The Mw of the hydrogenated copolymer is also 2,000,000 or less, more preferably 1,000,000 or less, still more preferably 700,000 or less. When the Mw is more than 2,000,000, processability tends to decrease.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) relative to polystyrene standards.

The hydrogenated copolymer preferably has a glass transition temperature (Tg) of -50°C or higher, more preferably -45°C or higher, still more preferably -40°C or higher, particularly preferably -35°C or higher. When the Tg is lower than -50°C, wet grip performance may deteriorate. The Tg of the hydrogenated copolymer is also preferably lower than -15°C, more preferably lower than -17.5°C, still more preferably lower than -20°C. When the Tg is -15°C or higher, fuel economy may deteriorate.

For the same reason as above, in the case of the pneumatic tire of the present invention to be used as a studless winter tire or an all-season tire, the Tg of the hydrogenated copolymer is preferably -50°C or higher, more preferably -43°C or higher. The Tg of the hydrogenated copolymer is also preferably lower than -25°C, more preferably lower than -30°C, still more preferably lower than -38°C.

In the case of the pneumatic tire of the present invention to be used as a summer tire, the glass transition temperature (Tg) of the hydrogenated copolymer is preferably -40°C or higher, more preferably -36°C or higher, still more preferably -33°C or higher, particularly preferably -29°C or higher. The Tg of the hydrogenated copolymer is also preferably lower than -15°C, more preferably lower than -19°C, still more preferably lower than -23°C.

The glass transition temperature (Tg) of the hydrogenated copolymer is measured as described in the Examples later.

The hydrogenated styrene-butadiene copolymer has a styrene content of 5% by mass or more, more preferably 10% by mass or more, still more preferably 15% by mass or more, particularly preferably 20% by mass or more, most preferably 25% by mass or more. When the styrene content is less than 5% by mass, sufficient grip performance may not be obtained. The styrene content of the hydrogenated styrene-butadiene copolymer is also 40% by mass or less, more preferably 35% by mass or less. When the styrene content is more than 40% by mass, sufficient rubber tensile strength and sufficient abrasion resistance may not be obtained, and fuel economy may also deteriorate. When the styrene content falls within the range indicated above, the effects of the present invention can be more suitably achieved.

For the same reason as above, in the case of the pneumatic tire of the present invention to be used as a studless winter tire or an all-season tire, the styrene content of the hydrogenated styrene-butadiene copolymer is preferably 5% by mass or more, more preferably 8% by mass or more, but is preferably 30% by mass or less, more preferably 20% by mass or less.

The styrene content is measured as described in the Examples later.

The hydrogenated copolymer may be synthesized, for example, by polymerizing an aromatic vinyl compound and a conjugated diene compound to produce a polymer, and hydrogenating the polymer, and specifically by the following method.

<Method for producing copolymer>

(Polymerization method)

The copolymer of an aromatic vinyl compound and a conjugated diene compound may be polymerized by any method, including solution polymerization, vapor phase polymerization, and bulk polymerization, and particularly preferably by solution polymerization. The polymerization may be carried out in a batch mode or in a continuous mode.

In the case of solution polymerization, the monomer concentration (the combined concentration of styrene and 1, 3-butadiene for styrene-butadiene copolymers) in the solvent is preferably 5% by mass or more, more preferably 10% by mass or more. When the monomer concentration in the solution is less than 5% by mass, the copolymer yield tends to be small, resulting in increased cost. The monomer concentration in the solvent is also preferably 50% by mass or less, more preferably 30% by mass or less. When the monomer concentration in the solvent is more than 50% by mass, the solution tends to become too viscous to stir easily, and thus polymerization tends not to occur easily.

(Polymerization initiator in anionic polymerization)

In the case of anionic polymerization, any type of polymerization initiator may be used, but preferred are organic lithium compounds. The organic lithium compound is preferably one containing a C2-C20 alkyl group, and examples include ethyllithium, n-propyllithium, isopropyllithium, n-butyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium, cyclopentyllithium, and reaction products of diisopropenylbenzene and butyllithium. In view of availability, safety and other aspects, n-butyllithium or sec-butyllithium is preferred among these.

The polymerization reaction may be carried out in the presence of a compound (R) obtained by mixing at least one of the organic lithium compounds mentioned above with a compound (B1) containing a functional group interactive with silica. When the polymerization is carried out in the presence of the compound (R), the functional group interactive with silica is introduced to the polymerization initiating terminal of the copolymer. As a result, the copolymer has a modified polymerization initiating terminal. The term "interactive" herein means the formation of a covalent bond or an intermolecular force weaker than covalent bonds (e.g. electromagnetic forces between molecules such as ion-dipole interaction, dipole-dipole interaction, hydrogen bond, or van der Waals force) between molecules. The term "functional group interactive with silica" refers to a group having at least one atom interactive with silica such as a nitrogen atom, a sulfur atom, a phosphorus atom, or an oxygen atom.

The compound (R) is preferably a reaction product of an organic lithium compound and a nitrogen-containing compound such as a secondary amine compound, among others. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, and 1,3-ditrimethylsilyl-1,3,5-triazinane. The polymerization in the presence of the compound (R) may be carried out by preliminarily mixing an organic lithium compound with a compound (B1) to prepare a compound (R), and adding the compound (R) to the polymerization system followed by polymerization. Alternatively, it may be carried out by adding an organic lithium compound and a compound (B1) to the polymerization system and mixing them in the polymerization system to prepare a compound (R) followed by polymerization.

(Method for anionic polymerization)

The production of the copolymer through anionic polymerization using the polymerization initiator may be carried out by any method including conventionally known methods.

Specifically, styrene and 1,3-butadiene, for example, may be anionically polymerized in an organic solvent inert to the reaction, for example, a hydrocarbon solvent such as an aliphatic, alicyclic, or aromatic hydrocarbon compound, using a polymerization initiator such as butyllithium, optionally in the presence of a randomizer to produce a target copolymer such as a styrene-butadiene copolymer.

(Hydrocarbon solvent in anionic polymerization)

The hydrocarbon solvent is preferably a C3-C8 hydrocarbon solvent, and examples include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. Each of these may be used alone, or two or more of these may be used in admixture.

(Randomizer in anionic polymerization)

The randomizer refers to a compound that has the function of controlling the microstructure of the conjugated diene units of a copolymer, for example, increase of 1,2-butadiene units or 3,4-isoprene units, or the function of controlling the compositional distribution of monomer units in a copolymer, for example, randomization of styrene units and butadiene units in a styrene-butadiene copolymer. The randomizer is not particularly limited, and any compound commonly and conventionally used as randomizer may be used. Examples include ethers and tertiary amines, such as dimethoxybenzene, tetrahydrofuran, dimethoxyethane, diethylene glycol dibutyl ether, diethylene glycol dimethyl ether, bis(tetrahydrofuryl)propane, triethylamine, pyridine, N-methylmorpholine, N,N,N',N'-tetramethylethylenediamine, and 1, 2-dipiperidinoethane. Other examples include potassium salts such as potassium-t-amylate and potassium-t-butoxide; and sodium salts such as sodium-t-amylate. Each of these randomizers may be used alone, or two or more of these may be used in combination. The amount of the randomizer to be used per mol of the organic lithium compound is preferably 0.01 mole equivalents or more, more preferably 0.05 mole equivalents or more. When the amount of the randomizer is less than 0.01 mole equivalents, the effect of the added randomizer tends to be small, and thus randomization tends not to occur easily. The amount of the randomizer per mol of the organic lithium compound is also preferably 1,000 mole equivalents or less, more preferably 500 mole equivalents or less. When the amount of the randomizer is more than 1,000 mole equivalents, the reaction rate of monomers tends to change greatly, and as a result randomization tends to fail to occur easily as expected.

The Tg of the copolymer can be controlled by varying the type or amount of the randomizer. For example, the Tg of the copolymer may be reduced by decreasing the amount of tetrahydrofuran.

(Reaction temperature)

The anionic polymerization may be carried out at any reaction temperature as long as the reaction suitably proceeds. In general, the reaction temperature is preferably -10°C to 100°C, more preferably 25°C to 70°C.

(Modification step)

A functional group interactive with silica may be introduced to the polymerization terminating terminal of the copolymer obtained by the above polymerization step by the step of reacting the active terminal of the copolymer with a compound (B2) containing a functional group interactive with silica. As a result, the copolymer has a modified polymerization terminating terminal. The term "terminal" herein refers to an end portion of the molecular chain, excluding monomer-derived structures containing carbon-carbon double bonds.

The copolymer used in the modification reaction (hereinafter, also referred to as terminal modification reaction) may be any copolymer which has an active terminal either with a modified or unmodified polymerization initiating terminal. The compound (B2) may be any compound which contains a functional group interactive with silica and is reactable with the polymerization active terminal. Preferable specific examples of the compound (B2) include:

(I) a compound (B2-1) represented by the following Formula (1):

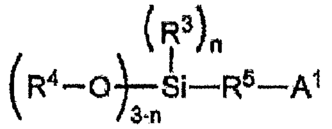

(1)

wherein $A^1$ represents a monovalent functional group which contains no active hydrogen, but contains at least one selected from the group consisting of a nitrogen atom, a phosphorus atom, and a sulfur atom, and is bound to $R^5$ through a nitrogen atom, a phosphorus atom, or a sulfur atom; $R^3$ and $R^4$ each represent a hydrocarbyl group; $R^5$ represents a hydrocarbylene group; and n represents an integer of 0 to 2, provided that when two or more $R^3$ or $R^4$ groups are present, they may be the same or different;

(II) a compound (B2-2) that has, in the molecule, one or more functional groups (x1) of at least one type selected from the group consisting of a cyclic ether group, a (thio)carbonyl group, and an iso(thio)cyanate group, and one or more groups (x2) different from the functional groups (x1) which contain no active hydrogen but contain at least one selected from the group consisting of a nitrogen atom, a phosphorus atom, an oxygen atom, and a sulfur atom, provided that at least one of the nitrogen, phosphorus, and sulfur atoms may be protected by a trisubstituted hydrocarbylsilyl group; and

(III) a compound (B2-3) having two or more iso(thio)cyanate groups in the molecule. Each of these compounds (B2)

may be used alone, or two or more of these compounds (B2) may be used in combination. Herein, the term "(thio)carbonyl group" refers to a carbonyl group and a thiocarbonyl group; and the term "iso(thio)cyanate group" refers to an isocyanate group and an isothiocyanate group.

The hydrocarbyl group for $R^3$ and $R^4$ in Formula (1) is preferably a linear or branched C1-C20 alkyl group, a C3-C20 cycloalkyl group, or a C6-C20 aryl group.

$R^5$ is preferably a linear or branched C1-C20 alkanediyl group, a C3-C20 cycloalkylene group, or a C6-C20 arylene group.

Preferably, n is 0 or 1 in order to increase the reactivity with the copolymer.

$A^1$ contains at least one selected from the group consisting of a nitrogen atom, a phosphorus atom, and a sulfur atom (hereinafter, also referred to as specific atom), and is bound to $R^5$ through the specific atom. The specific atom is bound to no active hydrogen, and may be protected by, for example, a trisubstituted hydrocarbylsilyl group. The term "active hydrogen" herein refers to a hydrogen atom bound to an atom other than a carbon atom, and preferably refers to a hydrogen atom having a lower bond energy than the carbon-hydrogen bond of polymethylene.

Preferably, $A^1$ is a group that can be converted to an onium ion by the action of an onium salt-forming agent, among others. The compound (B2) containing such a group ($A^1$) can impart excellent shape-retaining properties to the copolymer to be modified.

Specific examples of $A^1$ include a nitrogen-containing group in which two hydrogen atoms of a primary amino group are substituted by two protecting groups; a nitrogen-containing group in which one hydrogen atom of a secondary amino group is substituted by one protecting group; a tertiary amino group; an imino group; a pyridyl group; a phosphorus-containing group in which two hydrogen atoms of a primary phosphino group are substituted by two protecting groups; a phosphorus-containing group in which one hydrogen atom of a secondary phosphino group is substituted by one protecting group; a tertiary phosphino group; and a sulfur-containing group in which one hydrogen atom of a thiol group is substituted by one protecting group. Among these, groups containing a nitrogen atom are preferred because they have good affinity with silica. The term "protecting group" refers to a functional group that converts $A^1$ to a functional group inert to the polymerization active terminal, such as, for example, a trisubstituted hydrocarbylsilyl group.

Specific examples of the compound (B2-1) are as follows: Examples of compounds containing both an alkoxysilyl group and a nitrogen-containing group in which two hydrogen atoms of a primary amine are substituted by two protecting groups, a nitrogen-containing group in which one hydrogen atom of a secondary amine is substituted by one protecting group, or a tertiary amino group include N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, and 3-(4-trimethylsilyl-1-piperazino)propylmethyldimethoxysilane.

Examples of compounds containing both an alkoxysilyl group and an imino group or a pyridyl group include N-(1,3-dimethylbutylidene)-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, and trimethoxysilyl, methyldiethoxysilyl, or ethyldimethoxysilyl compounds corresponding to the foregoing triethoxysilyl compounds, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, 3-hexamethyleneiminopropyltrimethoxysilane, 3-hexamethyleneiminopropylmethyldimethoxysilane, and the foregoing compounds whose alkyl group and alkanediyl group are replaced with a C1-C6 alkyl group and a C1-C6 alkanediyl group, respectively.

Examples of compounds containing both an alkoxysilyl group and a phosphorus-containing group in which two hydrogen atoms of a primary phosphino group are substituted by two protecting groups, a phosphorus-containing group in which one hydrogen atom of a secondary phosphino group is substituted by one protecting group, a tertiary phosphino group, or a sulfur-containing group in which one hydrogen atom of a thiol group is substituted by one protecting group include P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyltrimethoxysilane, 3-diphenylphosphinopropyltriethoxysilane, 3-diphenylphosphinopropylmeryldimethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, and the foregoing compounds whose alkyl group and alkanediyl group are replaced with a C1-C6 alkyl group and a C1-C6 alkanediyl group, respectively. In addition, examples of compounds containing an iso(thio)cyanate group include 3-isocyanatopropyltrimethoxysilane and 3-isocyanatopropyltriethoxysilane.

In the compound (B2-2), the group (x2) is preferably a group that contains a nitrogen atom bound to no active hydrogen. Specific examples of such compounds include:

compounds containing a cyclic ether group, such as epoxy amine compounds, e.g. tetraglycidyl-1,3-bisaminomethylcyclohexane,

compounds containing a (thio)carbonyl group, such as 4-aminoacetophenones, e.g. 4-N,N-dimethylaminobenzophenone; bis(dihydrocarbylaminoalkyl)ketones, e.g. 1,7-bis(methylethylamino)-4-heptanone; dihydrocarbylaminoalkyl (meth)acrylates, e.g. 2-dimethylaminoethyl acrylate; hydrocarbylimidazolidinones, e.g. 1,3-dimethyl-2-imidazolidinone; N-hydrocarbylpyrrolidones, e.g. 1-phenyl-2-pyrrolidone; N-hydrocarbylcaprolactams, e.g. N-methyl-ε-caprolactam; N-dihydrocarbylformamides, e.g. N,N-diethylformamide; N,N-dihydrocarbylacetamides, e.g. N,N-dimethylacetamide; and (meth)acrylamides, e.g. N,N-dimethylacrylamide, and
compounds containing an iso(thio)cyanate group, e.g. 3-isocyanatopropyltrimethoxysilane.

Examples of the compound (B2-3) include 2,4-tolylene diisocyanate, 2,6-tolylene diisocyanate, diphenylmethane diisocyanate, naphthalene diisocyanate, triphenylmethane triisocyanate, p-phenylene diisocyanate, tris(isocyanatophenyl)thiophosphate, xylene diisocyanate, benzene-1,2,4-triisocyanate, naphthalene-1,2,5,7-tetraisocyanate, and 1,4-phenylene diisothiocyanate.

In particular, the compound (B2-1) is preferably used as the compound (B2) because it has high affinity with silica. When a silane compound (B2-1) is used, silicon tetrachloride or an epoxy-containing compound such as tetraglycidyl-1,3-bisaminomethylcyclohexane, for example, may be used with the silane compound (B2-1) to control the Mooney viscosity of the modified copolymer. The compounds (B2) mentioned above all have the same function in that they allow the resulting modified copolymer to have a modified polymerization terminating terminal. Accordingly, those which are not disclosed in the Examples later can also be used in the present invention. A structure represented by the Formula (1-1) below is introduced to the polymer terminal by a reaction between the compound represented by Formula (1) and the copolymer to be modified,

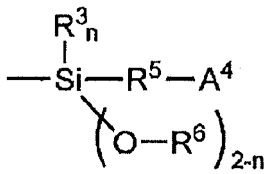
(1-1)

wherein $R^6$ represents a hydrogen atom or a hydrocarbyl group, and when two or more $R^6$ groups are present, they may be the same or different; and $A^4$, $R^3$, $R^5$ and n are as defined for $A^1$, $R^3$, $R^5$ and n, respectively, in Formula (1).

The terminal modification reaction may be carried out as a solution reaction, for example. The solution reaction may be conducted using a solution containing unreacted monomers obtained after completion of the polymerization reaction in the above polymerization step, or may be performed after the copolymer is isolated from the above solution and dissolved in an appropriate solvent such as cyclohexane. The terminal modification reaction may be carried out either batchwise or continuously. Here, the compound (B2) may be added by any method, for example, at one time, in portions, or continuously.

The amount of the compound (B2) used in the terminal modification reaction may be selected appropriately according to the type of compound used in the reaction. The amount of the compound (B2) is preferably 0.1 mole equivalents or more, more preferably 0.3 mole equivalents or more relative to the metal atom of the polymerization initiator that is involved in the polymerization reaction. When 0.1 mole equivalents or more of the compound (B2) is used, the modification reaction can proceed sufficiently, and the dispersibility of silica can be suitably improved.

The temperature of the terminal modification reaction is usually the same as the temperature of the polymerization reaction, and is preferably -20°C to 150°C, more preferably 0°C to 120°C, particularly preferably 20°C to 100°C. When the temperature of the modification reaction is low, the viscosity of the modified copolymer tends to increase, while when the temperature of the modification reaction is high, the polymerization active terminal can be easily deactivated. The duration of the modification reaction is preferably one minute to five hours, more preferably two minutes to one hour.

(Termination of reaction)

The anionic polymerization may be terminated by addition of a reaction terminator usually used in this technical field. Examples of the reaction terminator include polar solvents containing active protons such as acetic acid, and methanol, ethanol, isopropanol, and other alcohols, and mixtures of the foregoing. Other examples include mixtures of the foregoing polar solvents and non-polar solvents such as hexane or cyclohexane. Usually, the amount of the reaction terminator to be added is sufficient when it is about equal to or twice the molar amount of the initiator for anionic polymerization.

<Coupling>

In the method for producing the copolymer, a coupling agent may be added to the hydrocarbon solution of the copolymer at any time from the initiation of the polymerization of monomers until the polymer is recovered as described later. Examples of the coupling agent include compounds represented by the following Formula (2-1):

$$R^1_aML_{4-a} \qquad (2\text{-}1)$$

wherein $R^1$ represents an alkyl group, an alkenyl group, a cycloalkenyl group, or an aryl group; M represents a silicon atom or a tin atom; L represents a halogen atom or a hydrocarbyloxy group; and a represents an integer of 0 to 2.

Examples of the coupling agent represented by Formula (2-1) include silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, and diethoxydiethylsilane.

In order to enhance the processability of the polymer, the amount of the coupling agent to be added is preferably 0.03 mol or more, more preferably 0.05 mol or more, per mol of the alkali metal derived from an alkali metal catalyst. In order to enhance fuel economy, the amount is preferably 0.4 mol or less, more preferably 0.3 mol or less.

<Hydrogenation method>

In the method for producing the hydrogenated copolymer, the copolymer described above is hydrogenated to obtain a hydrogenated copolymer having a degree of hydrogenation of 75 mol% or more. The hydrogenation of the copolymer advantageously improves heat resistance. When the degree of hydrogenation is low, the effects of improving rubber tensile strength and abrasion resistance are not sufficiently achieved.

The hydrogenation may be carried out by any method under any reaction condition, including known methods and known conditions. Usually, the hydrogenation is carried out at 20°C to 150°C under 0.1 to 10 MPa hydrogen pressure in the presence of a hydrogenation catalyst. The degree of hydrogenation may be set appropriately by changing, for example, the amount of the hydrogenation catalyst, the hydrogen pressure during the hydrogenation reaction, or the duration of the reaction. The hydrogenation catalyst used may be usually a compound containing any of the metals of groups 4 to 11 of the periodic table. For example, compounds containing any of Ti, V, Co, Ni, Zr, Ru, Rh, Pd, Hf, Re, and Pt atoms can be used as the hydrogenation catalyst. More specific examples of the hydrogenation catalyst include metallocene compounds containing Ti, Zr, Hf, Co, Ni, Pd, Pt, Ru, Rh, Re, or other metals; supported heterogeneous catalysts in which a metal such as Pd, Ni, Pt, Rh, or Ru is supported on a carrier such as carbon, silica, alumina, or diatomaceous earth; homogeneous Ziegler catalysts in which an organic salt or acetylacetone salt of a metal element such as Ni or Co is combined with a reducing agent such as an organoaluminum; organometallic compounds or complexes of Ru, Rh, or other metals; and fullerenes and carbon nanotubes in which hydrogen is stored.

Among the above exemplary compounds, metallocene compounds containing Ti, Zr, Hf, Co, or Ni are preferred because they allow the hydrogenation reaction to be conducted in a homogeneous system in an inert organic solvent. Furthermore, metallocene compounds containing Ti, Zr, or Hf are preferred. In particular, hydrogenation catalysts obtained by reaction of titanocene compounds and alkyllithiums are preferred because such catalysts are inexpensive and industrially very useful. Specific examples include hydrogenation catalysts described in, for example, JP H1-275605 A, JP H5-271326 A, JP H5-271325 A, JP H5-222115 A, JP H11-292924 A, JP 2000-37632 A, JP S59-133203 A, JP S63-5401 A, JP S62-218403 A, JP H7-90017 A, JP S43-19960 B, and JP S47-40473 B. Each of these hydrogenation catalysts may be used alone, or two or more of these may be used in combination.

The amount of the hydrogenated copolymer per 100% by mass of the rubber component is 75% by mass or more, preferably 80% by mass or more, more preferably 90% by mass or more, still more preferably 100% by mass. When the amount of the hydrogenated copolymer is less than 75% by mass, the effects of improving rubber tensile strength and abrasion resistance (especially rubber tensile strength) tend not to be easily achieved.

In particular, in the case where the hydrogenated copolymer is a hydrogenated styrene-butadiene copolymer, the amount of the hydrogenated styrene-butadiene copolymer per 100% by mass of the rubber component is preferably 90% by mass or more, more preferably 95% by mass or more, still more preferably 100% by mass.

Examples of other rubbers that may be used in addition to the hydrogenated copolymer include conventional styrene-butadiene copolymer rubber (SBR), polybutadiene rubber (BR), butadiene-isoprene copolymer rubber, and butyl rubber. Other possible examples include natural rubber (NR), ethylene-propylene copolymers, and ethylene-octene copolymers. Two or more of these rubbers may be used in combination. NR and/or BR are especially preferred.

In the case where the rubber component contains NR, non-limiting examples of the NR include those commonly used in the tire industry, such as SIR20, RSS#3, and TSR20.

The amount of NR per 100% by mass of the rubber component is preferably 5% by mass or more. The amount

of NR is preferably 25% by mass or less, more preferably 20% by mass or less, still more preferably 10% by mass or less. The incorporation of the above amount of NR provides good fuel economy, so that a better balance of fuel economy, rubber tensile strength, and abrasion resistance is achieved.

In the case where the rubber component contains BR, any BR may be used including, for example, high-cis BR such as BR1220 available from Zeon Corporation and BR130B and BR150B both available from Ube Industries, Ltd., and BR containing syndiotactic polybutadiene crystals such as VCR412 and VCR617 both available from Ube Industries, Ltd. In particular, the BR preferably has a cis content of 90% by mass or more because such BR provides good abrasion resistance.

The amount of BR per 100% by mass of the rubber component is preferably 5% by mass or more, more preferably 10% by mass or more, but is preferably 25% by mass or less, more preferably 20% by mass or less.

The combined amount of NR and BR per 100% by mass of the rubber component is preferably 5% by mass or more, more preferably 10% by mass or more, but is preferably 25% by mass or less, more preferably 20% by mass or less.

The rubber composition in the present invention is characterized by containing carbon black and silica as fillers.

Examples of the carbon black contained in the rubber composition in the present invention include furnace blacks (furnace carbon blacks) such as SAF, ISAF, HAF, MAF, FEF, SRF, GPF, APF, FF, CF, SCF, and ECF; acetylene blacks (acetylene carbon blacks) ; thermal blacks (thermal carbon blacks) such as FT and MT; channel blacks (channel carbon blacks) such as EPC, MPC, and CC; and graphite. Each of these may be used alone, or two or more of these may be used in combination.

The carbon black usually has a nitrogen adsorption specific surface area ($N_2SA$) of 5 to 200 $m^2/g$. The lower limit is preferably 50 $m^2/g$, more preferably 80 $m^2/g$, while the upper limit is preferably 150 $m^2/g$, more preferably 120 $m^2/g$. The carbon black usually has a dibutyl phthalate (DBP) absorption of 5 to 300 mL/100 g. The lower limit is preferably 80 mL/100 g, while the upper limit is preferably 180 mL/100 g. Carbon black having an $N_2SA$ or DBP absorption of less than the lower limit indicated above tends to have only a small reinforcing effect, resulting in reduced abrasion resistance. Carbon black having an $N_2SA$ or DBP absorption of more than the upper limit indicated above tends to disperse poorly, resulting in increased hysteresis loss and reduced fuel economy.

For the same reason as above, in the case where the rubber composition in the present invention is used in a tread for truck or bus tires, the nitrogen adsorption specific surface area ($N_2SA$) of the carbon black is usually 5 to 200 $m^2/g$. The lower limit is preferably 50 $m^2/g$, more preferably 70 $m^2/g$, still more preferably 90 $m^2/g$, while the upper limit is preferably 150 $m^2/g$, more preferably 130 $m^2/g$. The dibutyl phthalate (DBP) absorption of the carbon black is usually 5 to 300 mL/100 g. The lower limit is preferably 80 mL/100 g, while the upper limit is preferably 180 mL/100 g.

The nitrogen adsorption specific surface area is measured in accordance with ASTM D4820-93. The DBP absorption is measured in accordance with ASTM D2414-93.

The amount of carbon black relative to 100 parts by mass of the rubber component is 3 parts by mass or more. When the amount is less than 3 parts by mass, sufficient reinforcing properties may not be obtained. The amount of carbon black is preferably 60 parts by mass or less, more preferably 30 parts by mass or less, still more preferably 15 parts by mass or less. When the amount is more than 60 parts by mass, fuel economy tends to deteriorate.

For the same reason as above, in the case where the rubber composition in the present invention is used in a tread for truck or bus tires, the amount of carbon black relative to 100 parts by mass of the rubber component is preferably 5 parts by mass or more, more preferably 10 parts by mass or more, still more preferably 20 parts by mass or more, particularly preferably 30 parts by mass or more. The amount of carbon black is also preferably 60 parts by mass or less, more preferably 50 parts by mass or less, still more preferably 40 parts by mass or less.

Non-limiting examples of the silica include dry silica (anhydrous silica) and wet silica (hydrous silica) . Wet silica is preferred as it contains many silanol groups.

The silica preferably has a nitrogen adsorption specific surface area ($N_2SA$) of 40 $m^2/g$ or more, more preferably 45 $m^2/g$ or more, still more preferably 55 $m^2/g$ or more, particularly preferably 60 $m^2/g$ or more, more particularly preferably 100 $m^2/g$ or more, most preferably 150 $m^2/g$ or more. When the $N_2SA$ is less than 40 $m^2/g$, abrasion resistance or rubber tensile strength may deteriorate. The silica preferably has an $N_2SA$ of 400 $m^2/g$ or less, more preferably 350 $m^2/g$ or less, still more preferably 300 $m^2/g$ or less, particularly preferably 270 $m^2/g$ or less, most preferably 220 $m^2/g$ or less. When the $N_2SA$ is more than 400 $m^2/g$, it may be difficult to disperse such silica, and fuel economy may deteriorate.

The nitrogen adsorption specific surface area of the silica is determined by the BET method in accordance with ASTM D3037-81.

The amount of silica relative to 100 parts by mass of the rubber component is 1 part by mass or more, preferably 10 parts by mass or more, more preferably 30 parts by mass or more, still more preferably 45 parts by mass or more. When the amount is less than 1 part by mass, the effect produced by the incorporation of silica tends not to be sufficiently achieved, and thus fuel economy or abrasion resistance tends to deteriorate. The amount of silica is 200 parts by mass or less, preferably 150 parts by mass or less, more preferably 120 parts by mass or less, still more preferably 100 parts by mass or less, particularly preferably 80 parts by mass or less. When the amount is more than 200 parts by mass, the

silica tends not to disperse easily, with the result that processability, fuel economy, and abrasion resistance tend to deteriorate.

For the same reason as above, in the case where the rubber composition in the present invention is used in a tread for truck or bus tires, the amount of silica relative to 100 parts by mass of the rubber component is preferably 10 parts by mass or more, more preferably 20 parts by mass or more. The amount of silica is also preferably 80 parts by mass or less, more preferably 60 parts by mass or less, still more preferably 50 parts by mass or less, particularly preferably 40 parts by mass or less, most preferably 30 parts by mass or less.

In the case where the rubber composition in the present invention is used in a tread for truck or bus tires, the combined amount of silica and carbon black in the rubber composition is preferably 10 parts by mass or more, more preferably 20 parts by mass or more, still more preferably 40 parts by mass or more, particularly preferably 50 parts by mass or more, relative to 100 parts by mass of the rubber component. When the combined amount is less than 10 parts by mass, sufficient reinforcing properties may not be obtained. The combined amount is preferably 150 parts by mass or less, more preferably 100 parts by mass or less, still more preferably 80 parts by mass or less, particularly preferably 70 parts by mass or less. When the combined amount is more than 150 parts by mass, sufficient fuel economy may not be obtained.

In the case where the rubber composition in the present invention is used in a tread for truck or bus tires, the amount of carbon black (carbon ratio) per 100% by mass of the total filler in the rubber composition is preferably 50% by mass or more, more preferably 55% by mass or more, still more preferably 57% by mass or more. When the carbon ratio is 50% by mass or more, the effects of the present invention can be more suitably achieved, and fuel economy as well as rubber tensile strength and abrasion resistance can be well improved. When the carbon ratio is less than 50% by mass, on the other hand, fuel economy tends to deteriorate. The carbon ratio is also preferably 70% by mass or less, more preferably 67% by mass or less, still more preferably 65% by mass or less. When the carbon ratio exceeds 70% by mass, fuel economy may deteriorate.

The rubber composition in the present invention may contain another filler in addition to carbon black and silica. The term "filler" herein refers to a material that may be incorporated in the rubber composition to reinforce rubber. Examples include white fillers such as calcium carbonate, mica including sericite, aluminum hydroxide, magnesium oxide, magnesium hydroxide, clay, talc, alumina, titanium oxide, and mica. Two or more of these fillers may be used in combination. In order to more suitably achieve the effects of the present invention, the combined amount of silica and carbon black per 100% by mass of the total filler is preferably 80% by mass or more, more preferably 90% by mass or more, and may be 100% by mass.

The rubber composition in the present invention preferably contains a silane coupling agent together with silica.

The silane coupling agent may be a conventionally known one, and examples include: sulfide silane coupling agents such as bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyltetrasulfide, 3-trimethoxysilylpropylbenzothiazolyltetrasulfide, 3-triethoxysilylpropylbenzothiazoletetrasulfide, 3-triethoxysilylpropyl methacrylate monosulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; and chloro silane coupling agents such as 3-chloropropyltrimethoxysilane, 3-chloropropyltriethoxysilane, 2-chloroethyltrimethoxysilane, and 2-chloroethyltriethoxysilane. Each of these silane coupling agents may be used alone, or two or more of these may be used in combination. In view of the coupling effect of silane coupling agents, processability, and cost, sulfide silane coupling agents are preferred among these, with bis(3-triethoxysilylpropyl)tetrasulfide or bis(3-triethoxysilylpropyl)disulfide being more preferred.

The amount of the silane coupling agent relative to 100 parts by mass of silica is preferably 3 parts by mass or more, more preferably 5 parts by mass or more. When the amount is less than 3 parts by mass, a sufficient coupling effect and high dispersion of silica tend not to be obtained, and the effects of the present invention tend not to be sufficiently achieved. Thus, fuel economy or rubber tensile strength may be reduced. The amount of the silane coupling agent relative to 100 parts by mass of silica is also preferably 15 parts by mass or less, more preferably 10 parts by mass or less. When the amount is more than 15 parts by mass, excess silane coupling agents may be left in the rubber composition, leading to reduction in the processability and tensile properties of the rubber composition.

For the same reason as above, in the case where the rubber composition in the present invention is used in a tread for truck or bus tires, the amount of the silane coupling agent relative to 100 parts by mass of silica is preferably 1 part by mass or more, more preferably 2 parts by mass or more, still more preferably 6 parts by mass or more,

particularly preferably 10 parts by mass or more. The amount of the silane coupling agent relative to 100 parts by mass of silica is also preferably 20 parts by mass or less, more preferably 15 parts by mass or less.

The rubber composition in the present invention may contain compounding agents conventionally used in the rubber industry, in addition to the above-described components. Examples include vulcanizing agents such as sulfur; vulcanization accelerators such as thiazole vulcanization accelerators, thiuram vulcanization accelerators, sulfenamide vulcanization accelerators, and guanidine vulcanization accelerators; vulcanization activators such as stearic acid and zinc oxide; organic peroxides; processing aids such as extender oil (oil) and lubricants; and antioxidants.

Examples of the extender oil (oil) include aromatic mineral oils (viscosity gravity constant (V.G.C.): 0.900 to 1.049), naphthenic mineral oils (V.G.C.: 0.850 to 0.899), and paraffinic mineral oils (V.G.C.: 0.790 to 0.849). The polycyclic aromatic content of the extender oil is preferably less than 3% by mass, more preferably less than 1% by mass. The polycyclic aromatic content is measured in accordance with the Institute of Petroleum (IP, U.K.) 346/92 method. The aromatic content (CA) of the extender oil is preferably 20% by mass or more. Two or more of these extender oils may be used in combination.

Examples of the vulcanization accelerator include thiazole vulcanization accelerators such as 2-mercaptobenzothiazole, dibenzothiazyl disulfide, and N-cyclohexyl-2-benzothiazylsulfenamide; thiuram vulcanization accelerators such as tetramethylthiuram monosulfide and tetramethylthiuram disulfide; sulfenamide vulcanization accelerators such as N-cyclohexyl-2-benzothiazolesulfenamide, N-t-butyl-2-benzothiazolesulfenamide, N-oxyethylene-2-benzothiazolesulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. Preferred among these are sulfenamide vulcanization accelerators, with N-cyclohexyl-2-benzothiazolesulfenamide being more preferred, because the effects of the present invention can be more suitably achieved. They are also preferably combined with guanidine vulcanization accelerators. The amount of the vulcanization accelerator is preferably 0.1 to 5 parts by mass, more preferably 0.2 to 4 parts by mass, relative to 100 parts by mass of the rubber component.

Non-limiting suitable examples of the vulcanizing agent include sulfur. The amount of sulfur relative to 100 parts by mass of the rubber component is preferably 0.5 to 5 parts by mass, more preferably 1 to 3 parts by mass. In such cases, the effects of the present invention can be more suitably achieved.

The rubber composition in the present invention can be prepared by usual methods. Specifically, for example, the components described above are kneaded using a Banbury mixer, a kneader, or an open roll mill, and the kneaded mixture is vulcanized, whereby the rubber composition is prepared.

The (vulcanized) rubber composition in the present invention whose tan $\delta$ peak temperature (Tg) is adjusted to lower than -16°C, preferably lower than -18°C, more preferably lower than -20°C provides good performance on snow and ice while maintaining fuel economy, thereby suitably achieving the effects of the present invention. Such a rubber composition can be suitably used to produce tires for use on snowy or icy roads, particularly studless winter tires that can be used in summer as well, without changing tires, i.e. so-called all-season tires. The lower limit of the tan $\delta$ peak temperature (Tg) of such a (vulcanized) rubber composition in the present invention is not particularly limited, but is preferably -35°C or higher, more preferably -30°C or higher. When the Tg is lower than -35°C, wet grip performance may deteriorate.

The tan $\delta$ peak temperature (Tg) is determined as described in the Examples later.

The tan $\delta$ peak temperature (Tg) of the rubber composition can be adjusted to lower than -16°C by varying the type of hydrogenated copolymer or the formulation of the rubber composition. For example, the tan $\delta$ peak temperature (Tg) of the rubber composition may be lowered, for example, by (1) reducing the styrene content of the hydrogenated copolymer, (2) increasing the amount of NR, or (3) increasing the amount of BR.

The (vulcanized) rubber composition in the present invention whose tan $\delta$ peak temperature (Tg) is adjusted to -16°C or higher, preferably -15°C or higher, still more preferably -14°C or higher maintains (wet) grip performance and suitably achieves the effects of the present invention. Such a rubber composition can be suitably used to produce summer tires. The upper limit of the tan $\delta$ peak temperature (Tg) of such a (vulcanized) rubber composition in the present invention is not particularly limited, but is preferably lower than -4°C, more preferably lower than -8°C, still more preferably lower than -10°C. When the Tg is -4°C or higher, fuel economy and abrasion resistance may deteriorate.

The tan $\delta$ peak temperature (Tg) of the rubber composition can be adjusted to -16°C or higher by varying the type of hydrogenated copolymer or the formulation of the rubber composition. For example, the tan $\delta$ peak temperature (Tg) of the rubber composition may be raised, for example, by (1) increasing the styrene content of the hydrogenated copolymer or (2) reducing the amount of BR.

The rubber composition in the present invention may be used for tire components, such as treads, sidewalls, carcasses, belts, or beads, and is especially suitable for treads of tires. A two-layer tread consists of an outer surface layer (cap tread) and an inner surface layer (base tread).

A multi-layer tread may be produced by assembling sheeted rubber compositions into a predetermined shape, or by feeding rubber compositions into an extruder with two or more screws, and forming them into a two- or more-layered product at the head outlet of the extruder.

The pneumatic tire of the present invention can be formed from the rubber composition by conventional methods. Specifically, a rubber composition incorporating a rubber component containing a hydrogenated copolymer and optionally the aforementioned compounding agents, before vulcanization, is extruded and processed into the shape of a tire component such as a tread and assembled with other tire components in a conventional manner on a tire building machine to build an unvulcanized tire. The unvulcanized tire is heated and pressurized in a vulcanizer, whereby a pneumatic tire of the present invention can be produced.

The pneumatic tire of the present invention can be suitably used as tires for passenger vehicles, trucks and buses, two-wheeled vehicles, racing vehicles, and other vehicles, and especially as passenger vehicle tires, more particularly studless winter tires, all-season tires, or summer tires, or as truck or bus tires.

EXAMPLES

The present invention is specifically described with reference to, but not limited to, examples below.

The chemicals used in the synthesis or polymerization are collectively listed below. The chemicals were purified as needed by conventional techniques.

THF: anhydrous tetrahydrofuran available from Kanto Chemical Co., Inc.
n-Hexane: product of Kanto Chemical Co., Inc.
Styrene: product of Kanto Chemical Co., Inc.
Butadiene: 1,3-butadiene available from Tokyo Chemical Industry Co., Ltd.
TMEDA: N,N,N',N'-tetramethylethylenediamine available from Kanto Chemical Co., Inc.
n-Butyllithium solution: 1.6 M solution of n-butyllithium in hexane available from Kanto Chemical Co., Inc.
2,6-Di-tert-butyl-p-cresol: Nocrac 200 available from Ouchi Shinko Chemical Industrial Co., Ltd.
Amine modifier: N,N-bis(trimethylsilyl)-aminopropylmethyldiethoxysilane
Alcohol: methanol available from Tokyo Chemical Industry Co., Ltd.

The methods for evaluating the prepared copolymers are collectively described below.

(Measurement of degree of hydrogenation of conjugated diene units of copolymer)

A 15% by mass solution of each copolymer in carbon tetrachloride was prepared to measure a $^1$H-NMR spectrum at 100 MHz. The degree of hydrogenation was calculated from the rate of decrease in the intensity of the $^1$H-NMR spectrum corresponding to unsaturated bonds.

(Measurement of styrene content)

A $^1$H-NMR spectrum was measured using a JEOL JNM-A 400 NMR device at 25°C. The ratio of phenyl protons of the styrene unit at 6.5 to 7.2 ppm to vinyl protons of the butadiene unit at 4.9 to 5.4 ppm was determined based on the spectrum. The styrene content was calculated from the ratio.

(Measurement of weight average molecular weight (Mw) and number average molecular weight (Mn))

The weight average molecular weight (Mw) and number average molecular weight (Mn) of each copolymer were determined by gel permeation chromatography (GPC) (GPC-8000 series available from Tosoh Corporation, detector: differential refractometer, column: TSKGEL SUPERMULTIPORE HZ-M available from Tosoh Corporation) relative to polystyrene standards. In the case of copolymers containing a modifying group, the Mw and Mn were measured before the copolymers were modified. This is because the Mw and Mn of copolymers containing a modifying group are not accurately determinable due to the interaction between the modifying group and the silica gel in the column.

(Measurement of glass transition temperature (Tg))

The glass transition onset temperature was measured in accordance with JIS K 7121 using a differential scanning calorimeter (Q200, available from TA instruments Japan Inc.) while increasing the temperature at a rate of temperature rise of 10°C/min. The glass transition onset temperature was taken as the glass transition temperature (Tg).

<Copolymer Production Examples>

Synthesis Example A-1 (Synthesis of copolymer (A-1): SBR with a degree of hydrogenation of 0 mol%)

To a sufficiently nitrogen-purged heat-resistant reaction vessel were charged 2,000 mL of n-hexane, 60 g of

styrene, 140 g of 1, 3-butadiene, 0.93 g of TMEDA, and 0.45 mmol of n-butyllithium, followed by stirring at 50°C for 5 hours to cause a polymerization reaction. After the reaction was terminated by addition of alcohol, 1 g of 2, 6-di-tert-butyl-p-cresol was added to the reaction solution. The resulting solution was purified by reprecipitation to obtain copolymer (A-1). The copolymer (A-1) had a weight average molecular weight (Mw) of 490,000 and a styrene content of 30% by mass.

Synthesis Example A-2 (Synthesis of copolymer (A-2): hydrogenated SBR with a degree of hydrogenation of 60 mol%)

Copolymer (A-2) was produced as in the synthesis of copolymer (A-1), except that the obtained polymer was hydrogenated. Specifically, after the polymerization conversion reaction in the synthesis of copolymer (A-1), the polymerization reaction was not terminated by addition of alcohol. Instead, the reaction solution was then stirred for 20 minutes while supplying hydrogen gas at a pressure of 0.4 MPa gauge to react the unreacted polymer terminal lithium with hydrogen into lithium hydride. Hydrogenation was conducted using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure, and then the reaction solution was drawn from the reaction vessel and introduced into water with stirring. The solvent was removed by steam stripping to obtain copolymer (A-2). The copolymer (A-2) had a degree of hydrogenation of 60 mol% and a weight average molecular weight (Mw) of 450,000.

Synthesis Example A-3 (Synthesis of copolymer (A-3): hydrogenated SBR with a degree of hydrogenation of 80 mol%)

Copolymer (A-3) was produced as in the synthesis of copolymer (A-2), except that the cumulative amount of absorbed hydrogen was adjusted so as to correspond to the target degree of hydrogenation. The copolymer (A-3) had a degree of hydrogenation of 80 mol% and a weight average molecular weight (Mw) of 480,000.

Synthesis Example A-4 (Synthesis of copolymer (A-4): hydrogenated SBR with a degree of hydrogenation of 95 mol%)

Copolymer (A-4) was produced as in the synthesis of copolymer (A-2), except that the cumulative amount of absorbed hydrogen was adjusted so as to correspond to the target degree of hydrogenation. The copolymer (A-4) had a degree of hydrogenation of 95 mol% and a weight average molecular weight (Mw) of 450,000.

Synthesis Example A-5 (Synthesis of copolymer (A-5): hydrogenated modified SBR with a degree of hydrogenation of 95 mol%)

To a sufficiently nitrogen-purged heat-resistant reaction vessel were charged 2,000 mL of n-hexane, 60 g of styrene, 140 g of 1, 3-butadiene, 0.93 g of TMEDA, and 0.45 mmol of n-butyllithium, followed by stirring at 50°C for 5 hours to cause a polymerization reaction. Then, 0.15 mol of an amine modifier was added and stirred at 0°C for 1 hour. The subsequent procedure was as described in the synthesis of copolymer (A-2), except for the adjustment of the cumulative amount of absorbed hydrogen. In this way, copolymer (A-5) was produced. The copolymer (A-5) had a degree of hydrogenation of 95 mol% and a weight average molecular weight (Mw) before the modification of 440,000.

[Table 1]

| | Copolymer (A-1) | Copolymer (A-2) | Copolymer (A-3) | Copolymer (A-4) | Copolymer (A-5) |
|---|---|---|---|---|---|
| Degree of hydrogenation (mol%) | 0 | 60 | 80 | 95 | 95 |
| Styrene content (% by mass) | 30 | 30 | 30 | 30 | 30 |
| Butadiene content (% by mass) | 70 | 70 | 70 | 70 | 70 |
| Weight average molecular weight (Mw) | 490,000 | 450,000 | 480,000 | 450,000 | 440,000 |
| Mw/Mn | 1.18 | 1.19 | 1.22 | 1.18 | 1.31 |

(continued)

| | Copolymer (A-1) | Copolymer (A-2) | Copolymer (A-3) | Copolymer (A-4) | Copolymer (A-5) |
|---|---|---|---|---|---|
| Glass transition temperature (Tg) (°C) | -30 | -31 | -30 | -30 | -30 |

Synthesis Example B-1 (Synthesis of copolymer (B-1): SBR with a degree of hydrogenation of 0 mol%)

To a sufficiently nitrogen-purged heat-resistant reaction vessel were charged 2,000 mL of n-hexane, 60 g of styrene, 140 g of butadiene, 1.75 g of THF, and 0.45 mmol of n-butyllithium, followed by stirring at 50°C for 5 hours to cause a polymerization reaction. After the reaction was terminated by addition of alcohol, 1 g of 2, 6-di-tert-butyl-p-cresol was added to the reaction solution. The resulting solution was purified by reprecipitation to obtain copolymer (B-1). The copolymer (B-1) had a weight average molecular weight (Mw) of 490,000 and a styrene content of 30% by mass.

Synthesis Example B-2 (Synthesis of copolymer (B-2): hydrogenated SBR with a degree of hydrogenation of 60 mol%)

Copolymer (B-2) was produced as in the synthesis of copolymer (B-1), except that the obtained polymer was hydrogenated. Specifically, after the polymerization conversion reaction in the synthesis of copolymer (B-1), the polymerization reaction was not terminated by addition of alcohol. Instead, the reaction solution was then stirred for 20 minutes while supplying hydrogen gas at a pressure of 0.4 MPa gauge to react the unreacted polymer terminal lithium with hydrogen into lithium hydride. Hydrogenation was conducted using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure, and then the reaction solution was drawn from the reaction vessel and introduced into water with stirring. The solvent was removed by steam stripping to obtain copolymer (B-2). The copolymer (B-2) had a degree of hydrogenation of 60 mol% and a weight average molecular weight (Mw) of 450,000.

Synthesis Example B-3 (Synthesis of copolymer (B-3): hydrogenated SBR with a degree of hydrogenation of 80 mol%)

Copolymer (B-3) was produced as in the synthesis of copolymer (B-2), except that the cumulative amount of absorbed hydrogen was adjusted so as to correspond to the target degree of hydrogenation. The copolymer (B-3) had a degree of hydrogenation of 80 mol% and a weight average molecular weight (Mw) of 480,000.

Synthesis Example B-4 (Synthesis of copolymer (B-4): hydrogenated SBR with a degree of hydrogenation of 95 mol%)

Copolymer (B-4) was produced as in the synthesis of copolymer (B-2), except that the cumulative amount of absorbed hydrogen was adjusted so as to correspond to the target degree of hydrogenation. The copolymer (B-4) had a degree of hydrogenation of 95 mol% and a weight average molecular weight (Mw) of 450,000.

Synthesis Example B-5 (Synthesis of copolymer (B-5): hydrogenated modified SBR with a degree of hydrogenation of 95 mol%)

To a sufficiently nitrogen-purged heat-resistant reaction vessel were charged 2,000 mL of n-hexane, 60 g of styrene, 140 g of 1,3-butadiene, 0.93 g of TMEDA, and 0.45 mmol of n-butyllithium, followed by stirring at 50°C for 5 hours to cause a polymerization reaction. Then, 0.15 mol of an amine modifier was added and stirred at 0°C for 1 hour. The subsequent procedure was as described in the synthesis of copolymer (B-2), except for the adjustment of the cumulative amount of absorbed hydrogen. In this way, copolymer (B-5) was produced. The copolymer (5) had a degree of hydrogenation of 95 mol% and a weight average molecular weight (Mw) before the modification of 440,000.

[Table 2]

| | Copolymer (B-1) | Copolymer (B-2) | Copolymer (B-3) | Copolymer (B-4) | Copolymer (B-5) |
|---|---|---|---|---|---|
| Degree of hydrogenation (mol%) | 0 | 60 | 80 | 95 | 95 |

(continued)

| | Copolymer (B-1) | Copolymer (B-2) | Copolymer (B-3) | Copolymer (B-4) | Copolymer (B-5) |
|---|---|---|---|---|---|
| Styrene content (% by mass) | 30 | 30 | 30 | 30 | 30 |
| Butadiene content (% by mass) | 70 | 70 | 70 | 70 | 70 |
| Weight average molecular weight (Mw) | 490,000 | 450,000 | 480,000 | 450,000 | 440,000 |
| Mw/Mn | 1.18 | 1.19 | 1.22 | 1.18 | 1.27 |

Synthesis Example C-1 (Synthesis of copolymer (C-1): SBR with a degree of hydrogenation of 0 mol%)

To a sufficiently nitrogen-purged heat-resistant reaction vessel were charged 2,000 mL of n-hexane, 20 g of styrene, 180 g of 1,3-butadiene, 15.0 g of THF, and 0.45 mmol of n-butyllithium, followed by stirring at 50°C for 5 hours to cause a polymerization reaction. After the reaction was terminated by addition of alcohol, 1 g of 2, 6-di-tert-butyl-p-cresol was added to the reaction solution. The resulting solution was purified by reprecipitation to obtain copolymer (C-1). The copolymer (C-1) had a weight average molecular weight (Mw) of 480,000 and a styrene content of 10% by mass.

Synthesis Example C-2 (Synthesis of copolymer (C-2): hydrogenated SBR with a degree of hydrogenation of 0 mol%)

To a sufficiently nitrogen-purged heat-resistant reaction vessel were charged 2,000 mL of n-hexane, 20 g of styrene, 180 g of 1,3-butadiene, 1.75 g of THF, and 0.45 mmol of n-butyllithium, followed by stirring at 50°C for 5 hours to cause a polymerization reaction. After the reaction was terminated by addition of alcohol, 1 g of 2, 6-di-tert-butyl-p-cresol was added to the reaction solution. The resulting solution was purified by reprecipitation to obtain copolymer (C-2). The copolymer (C-2) had a weight average molecular weight (Mw) of 490,000 and a styrene content of 10% by mass.

Synthesis Example C-3 (Synthesis of copolymer (C-3): hydrogenated SBR with a degree of hydrogenation of 60 mol%)

Copolymer (C-3) was produced as in the synthesis of copolymer (C-2), except that the obtained polymer was hydrogenated. Specifically, after the polymerization conversion reaction in the synthesis of copolymer (C-2), the polymerization reaction was not terminated by addition of alcohol. Instead, the reaction solution was then stirred for 20 minutes while supplying hydrogen gas at a pressure of 0.4 MPa gauge to react the unreacted polymer terminal lithium with hydrogen into lithium hydride. Hydrogenation was conducted using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure, and then the reaction solution was drawn from the reaction vessel and introduced into water with stirring. The solvent was removed by steam stripping to obtain a hydrogenated copolymer. The copolymer (C-3) had a degree of hydrogenation of 60 mol% and a weight average molecular weight (Mw) of 450,000.

Synthesis Example C-4 (Synthesis of copolymer (C-4): hydrogenated SBR with a degree of hydrogenation of 80 mol%)

Copolymer (C-4) was produced as in the synthesis of copolymer (C-3), except that the cumulative amount of absorbed hydrogen was adjusted so as to correspond to the target degree of hydrogenation. The copolymer (C-4) had a degree of hydrogenation of 80 mol% and a weight average molecular weight (Mw) of 480,000.

Synthesis Example C-5 (Synthesis of copolymer (C-5): hydrogenated SBR with a degree of hydrogenation of 95 mol%)

Copolymer (C-5) was produced as in the synthesis of copolymer (C-3), except that the cumulative amount of absorbed hydrogen was adjusted so as to correspond to the target degree of hydrogenation. The copolymer (C-5) had a degree of hydrogenation of 95 mol% and a weight average molecular weight (Mw) of 450,000.

Synthesis Example C-6 (Synthesis of copolymer (C-6): hydrogenated modified SBR with a degree of hydrogenation of 95 mol%)

To a sufficiently nitrogen-purged heat-resistant reaction vessel were charged 2,000 mL of n-hexane, 20 g of styrene, 180 g of 1, 3-butadiene, 0.93 g of TMEDA, and 0.45 mmol of n-butyllithium, followed by stirring at 50°C for 5 hours to cause a polymerization reaction. Then, 0.15 mol of an amine modifier was added and stirred at 0°C for 1 hour. The subsequent procedure was as described in the synthesis of copolymer (C-2), except for the adjustment of the cumulative amount of absorbed hydrogen. In this way, copolymer (C-6) was produced. The copolymer (C-6) had a degree of hydrogenation of 95 mol% and a weight average molecular weight (Mw) before the modification of 440,000.

[Table 3]

| | Copolymer (C-1) | Copolymer (C-2) | Copolymer (C-3) | Copolymer (C-4) | Copolymer (C-5) | Copolymer (C-6) |
|---|---|---|---|---|---|---|
| Degree of hydrogenation (mol%) | 0 | 0 | 60 | 80 | 95 | 95 |
| Styrene content (% by mass) | 10 | 10 | 10 | 10 | 10 | 10 |
| Butadiene content (% by mass) | 90 | 90 | 90 | 90 | 90 | 90 |
| Weight average molecular weight (Mw) | 480,000 | 490,000 | 450,000 | 480,000 | 450,000 | 440,000 |
| Mw/Mn | 1.15 | 1.18 | 1.19 | 1.22 | 1.18 | 1.27 |
| Glass transition temperature (Tg) (°C) | -18 | -41 | -40 | -41 | -41 | -41 |

Synthesis Example D-1 (Synthesis of copolymer (D-1): SBR with a degree of hydrogenation of 0 mol%)

To a sufficiently nitrogen-purged heat-resistant reaction vessel were charged 2,000 mL of n-hexane, 70 g of styrene, 130 g of 1,3-butadiene, 12.5 g of THF, and 0.45 mmol of n-butyllithium, followed by stirring at 50°C for 5 hours to cause a polymerization reaction. After the reaction was terminated by addition of alcohol, 1 g of 2, 6-di-tert-butyl-p-cresol was added to the reaction solution. The resulting solution was purified by reprecipitation to obtain copolymer (D-1). The copolymer (D-1) had a weight average molecular weight (Mw) of 490,000 and a styrene content of 35% by mass.

Synthesis Example D-2 (Synthesis of copolymer (D-2): SBR with a degree of hydrogenation of 60 mol%)

Copolymer (D-2) was produced as in the synthesis of copolymer (D-1), except that the obtained polymer was hydrogenated. Specifically, after the polymerization conversion reaction in the synthesis of copolymer (D-1), the polymerization reaction was not terminated by addition of alcohol. Instead, the reaction solution was then stirred for 20 minutes while supplying hydrogen gas at a pressure of 0.4 MPa gauge to react the unreacted polymer terminal lithium with hydrogen into lithium hydride. Hydrogenation was conducted using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure, and then the reaction solution was drawn from the reaction vessel and introduced into water with stirring. The solvent was removed by steam stripping to obtain copolymer (D-2). The copolymer (D-2) had a degree of hydrogenation of 60 mol% and a weight average molecular weight (Mw) of 450,000.

Synthesis Example D-3 (Synthesis of copolymer (D-3): hydrogenated SBR with a degree of hydrogenation of 80 mol%)

Copolymer (D-3) was produced as in the synthesis of copolymer (D-2), except that the cumulative amount of absorbed hydrogen was adjusted so as to correspond to the target degree of hydrogenation. The copolymer (D-3) had

a degree of hydrogenation of 80 mol% and a weight average molecular weight (Mw) of 480,000.

Synthesis Example D-4 (Synthesis of copolymer (D-4): hydrogenated SBR with a degree of hydrogenation of 95 mol%)

Copolymer (D-4) was produced as in the synthesis of copolymer (D-2), except that the cumulative amount of absorbed hydrogen was adjusted so as to correspond to the target degree of hydrogenation. The copolymer (D-4) had a degree of hydrogenation of 95 mol% and a weight average molecular weight (Mw) of 450,000.

Synthesis Example D-5 (Synthesis of copolymer (D-5): hydrogenated modified SBR with a degree of hydrogenation of 95 mol%)

To a sufficiently nitrogen-purged heat-resistant reaction vessel were charged 2,000 mL of n-hexane, 70 g of styrene, 130 g of 1, 3-butadiene, 0.93 g of TMEDA, and 0.45 mmol of n-butyllithium, followed by stirring at 50°C for 5 hours to cause a polymerization reaction. Then, 0.15 mol of an amine modifier was added and stirred at 0°C for 1 hour. The subsequent procedure was as described in the synthesis of copolymer (D-2), except for the adjustment of the cumulative amount of absorbed hydrogen. In this way, copolymer (D-5) was produced. The copolymer (D-5) had a degree of hydrogenation of 95 mol% and a weight average molecular weight (Mw) of 440,000.

[Table 4]

| | Copolymer (D-1) | Copolymer (D-2) | Copolymer (D-3) | Copolymer (D-4) | Copolymer (D-5) |
|---|---|---|---|---|---|
| Degree of hydrogenation (mol%) | 0 | 60 | 80 | 95 | 95 |
| Styrene content (% by mass) | 35 | 35 | 35 | 35 | 35 |
| Butadiene content (% by mass) | 65 | 65 | 65 | 65 | 65 |
| Weight average molecular weight (Mw) | 490,000 | 450,000 | 480,000 | 450,000 | 440,000 |
| Mw/Mn | 1.18 | 1.19 | 1.22 | 1.18 | 1.18 |
| Glass transition temperature (Tg) (°C) | -25 | -25 | -25 | -26 | -25 |

The chemicals used in the examples and comparative examples are listed below.
Copolymers (A-1) to (A-5), (B-1) to (B-5), (C-1) to (C-6), and (D-1) to (D-5): copolymers synthesized as above
Natural rubber: TSR20
Polybutadiene rubber: UBEPOL BR150B (cis content: 97% by mass) available from Ube Industries, Ltd.
Carbon black (1): Diablack N339 ($N_2SA$: 96 $m^2/g$, DBP absorption: 124 mL/100 g) available from Mitsubishi Chemical Corporation
Carbon black (2): Diablack N220 ($N_2SA$: 111 $m^2/g$, DBP absorption: 115 mL/100 g) available from Mitsubishi Chemical Corporation
Oil: X-140 available from JX Nippon Oil & Energy Corporation
Silica: ULTRASIL VN3 ($N_2SA$: 180 $m^2/g$) available from EVONIK
Silane coupling agent: Si69 (bis(3-triethoxysilylpropyl)tetrasulfide) available from Degussa
Antioxidant: Antigene 3C available from Sumitomo Chemical Co., Ltd.
Stearic acid: stearic acid beads "TSUBAKI" available from NOF Corporation
Zinc oxide: zinc oxide #1 available from Mitsui Mining & Smelting Co., Ltd.
Wax: Sunnoc N available from Ouchi Shinko Chemical Industrial Co., Ltd.
Sulfur: sulfur powder available from Tsurumi Chemical Industry Co., Ltd.
Vulcanization accelerator (1): Soxinol CZ (N-cyclohexyl-2-benzothiazolylsulfenamide) available from Sumitomo Chemical Co., Ltd.

Vulcanization accelerator (2): Soxinol D (1, 3-diphenylguanidine) available from Sumitomo Chemical Co., Ltd.

(Examples and Comparative Examples)

According to the formulations shown in Tables 5 to 8, the materials other than the sulfur and vulcanization accelerators were kneaded for 5 minutes at 150°C using a 1.7-L Banbury mixer (available from Kobe Steel, Ltd.) to give a kneaded mixture. Next, the sulfur and vulcanization accelerators were added to the kneaded mixture, followed by kneading for 5 minutes at 80°C using an open roll mill to give an unvulcanized rubber composition. The unvulcanized rubber composition was press-vulcanized for 20 minutes at 170°C in a 0.5 mm-thick mold to obtain a vulcanized rubber composition.

<Evaluation items and test methods>

The vulcanized rubber compositions prepared as above were evaluated for the following items. Tables 5 to 8 show the results. The reference formulations in the tables are as follows.

Table 5: Comparative Example A-2
Table 6: Comparative Example B-1
Table 7: Comparative Example C-2
Table 8: Comparative Example D-2

(Rubber tensile strength) Tables 5 to 8

The vulcanized rubber compositions were subjected to a tensile test in accordance with JIS K 6251 to measure the elongation at break. The results are expressed as an index, with the respective reference formulations set equal to 100. A higher index indicates greater rubber tensile strength.

(Rubber tensile strength index) = (Rubber tensile strength of each formulation)/(Rubber tensile strength of reference formulation) × 100

(Abrasion resistance) Tables 5 to 8

The volume loss of each vulcanized rubber composition was measured with a laboratory abrasion and skid tester (LAT tester) at a load of 50 N, a speed of 20 km/h, and a slip angle of 5 degrees. The volume losses are expressed as an index, with the respective reference formulations set equal to 100. A higher index indicates better abrasion resistance.

(Fuel economy) Tables 5 to 8

The tan δ of the vulcanized rubber compositions was measured at a dynamic strain amplitude of 1%, a frequency of 10 Hz, and a temperature of 50°C using a spectrometer (available from Ueshima Seisakusho Co., Ltd.) . The reciprocals of the tan δ values are expressed as an index, with the respective reference formulations set equal to 100. A higher index indicates a smaller rolling resistance, which in turn indicates better fuel economy. Indexes of 98 or higher are considered good.

(Ozone Resistance Test) Tables 5, 7, and 8

In accordance with the method "Rubber, vulcanized or thermoplastic -- Determination of ozone resistance" specified in JIS K 6259, ozone resistance was evaluated by observing cracking after testing for 48 hours at an ozone concentration of 50 ± 5 pphm, a temperature of 25°C, and a tensile strain of 20 ± 2%. In the evaluation, the number and size of cracks were recorded in accordance with the JIS method. The alphabetical ratings (A, B, and C) are: A, indicating the number of cracks is small; C, indicating that the number of cracks is large. As for the numerical ratings (1 to 5), a larger number indicates a larger crack size. The "None" indicates no cracking. Only the samples with no cracking are considered good.

(Conductivity) Tables 5 and 8

15-cm square test pieces with a thickness of 2 mm were prepared from the vulcanized rubber compositions. Then, the electric resistance (volume resistivity (Ω·cm)) of the test pieces was measured using an electric resistance meter R8340A (available from Advantest) under conditions including a voltage of 500 V, a temperature of 25°C, and a humidity of 50%. Using the equation below, the volume resistivity of each formulation is expressed as an index, with the respective reference formulations set equal to 100. A higher index indicates a lower volume resistivity (lower electric resistance), which in turn indicates better conductivity. Indexes of 100 or higher are considered good.

$$\text{(Conductivity index)} = \text{(Volume resistivity of reference formulation)}/\text{(Volume resistivity of each formulation)} \times 100$$

(tan δ peak temperature) Tables 7 and 8

Test pieces of a predetermined size were prepared from the vulcanized rubber compositions. A temperature dependence curve of tan δ of each test piece over the temperature range of -100°C to 100°C was obtained using a viscoelasticity spectrometer VES (available from Iwamoto Seisakusho Co., Ltd.) at an initial strain of 10%, a dynamic strain of 0.5%, a frequency of 10 Hz, an amplitude of ± 0.25%, and a rate of temperature increase of 2°C/min. The temperature corresponding to the maximum tan δ in the temperature dependence curve is taken as the tan δ peak temperature.

[Table 5]

| | | Degree of hydrogenation (mol%) | Comparative Example A-1 | Comparative Example A-2 | Comparative Example A-3 | Example A-1 | Example A-2 | Example A-3 | Example A-4 | Comparative Example A-4 |
|---|---|---|---|---|---|---|---|---|---|---|
| Formulation (parts by mass) | Copolymer (A-1) | 0 | 100 | 100 | – | – | – | – | – | – |
| | Copolymer (A-2) | 60 | – | – | 100 | – | – | – | – | – |
| | Copolymer (A-3) | 80 | – | – | – | 100 | – | – | – | – |
| | Copolymer (A-4) | 95 | – | – | – | – | 100 | – | 90 | 70 |
| | Copolymer (A-5) | 95 | – | – | – | – | – | 100 | – | – |
| | Natural rubber | – | – | – | – | – | – | – | 10 | 30 |
| | Carbon black (1) | – | 1 | 5 | 5 | 5 | 5 | 5 | 5 | 5 |
| | Oil | – | 25 | 25 | 25 | 25 | 25 | 25 | 25 | 25 |
| | Silica | – | 75 | 75 | 75 | 75 | 75 | 75 | 75 | 75 |
| | Silane coupling agent | – | 6 | 6 | 6 | 6 | 6 | 6 | 6 | 6 |
| | Antioxidant | – | 1.5 | 1.5 | 1.5 | 1.5 | 1.5 | 1.5 | 1.5 | 1.5 |
| | Stearic acid | – | 2 | 2 | 2 | 2 | 2 | 2 | 2 | 2 |
| | Zinc oxide | – | 2.5 | 2.5 | 2.5 | 2.5 | 2.5 | 2.5 | 2.5 | 2.5 |
| | Wax | – | 1 | 1 | 1 | 1 | 1 | 1 | 1 | 1 |
| | Sulfur | – | 2 | 2 | 2 | 2 | 2 | 2 | 2 | 2 |
| | Vulcanization accelerator (1) | – | 1.8 | 1.8 | 1.8 | 1.8 | 1.8 | 1.8 | 1.8 | 1.8 |
| | Vulcanization accelerator (2) | – | 1.2 | 1.2 | 1.2 | 1.2 | 1.2 | 1.2 | 1.2 | 1.2 |
| Evaluation | Rubber tensile strength index | – | 98 | 100 | 105 | 195 | 210 | 210 | 147 | 84 |
| | Abrasion resistance index | – | 99 | 100 | 105 | 120 | 135 | 137 | 130 | 115 |
| | Fuel economy index | – | 102 | 100 | 100 | 99 | 99 | 110 | 104 | 105 |
| | Ozone resistance | – | C4 | C3 | B3 | None | None | None | None | B2 |
| | Conductivity index | – | 95 | 100 | 100 | 100 | 100 | 100 | 100 | 100 |

The results in Table 5 demonstrate that in Examples A-1 to A-4 using rubber compositions each of which contained, per 100% by mass of the rubber component, 75% by mass or more of a hydrogenated styrene-butadiene copolymer having a degree of hydrogenation of 75 mol% or more, and further contained, relative to 100 parts by mass of the rubber component, 3 parts by mass or more of carbon black and 1 to 200 parts by mass of silica, rubber tensile strength, abrasion resistance, and ozone resistance were well improved while maintaining or improving good fuel econ-

omy and good conductivity.

[Table 6]

| | | Degree of hydrogenation (mol%) | Comparative Example B-1 | Comparative Example B-2 | Comparative Example B-3 | Example B-1 | Example B-2 | Example B-3 | Example B-4 | Example B-5 | Comparative Example B-4 | Comparative Example B-5 |
|---|---|---|---|---|---|---|---|---|---|---|---|---|
| Formulation (parts by mass) | Copolymer (B-1) | 0 | – | 100 | – | – | – | – | – | – | – | – |
| | Copolymer (B-2) | 60 | – | – | 100 | – | – | – | – | – | – | – |
| | Copolymer (B-3) | 80 | – | – | – | 100 | – | – | – | – | – | – |
| | Copolymer (B-4) | 95 | – | – | – | – | 100 | – | 90 | 90 | 70 | 70 |
| | Copolymer (B-5) | 95 | – | – | – | – | – | 100 | – | – | – | – |
| | Natural rubber | – | 80 | – | – | – | – | – | 10 | – | 30 | – |
| | Polybutadiene rubber | – | 20 | – | – | – | – | – | – | 10 | – | 30 |
| | Carbon black (2) | – | 35 | 35 | 35 | 35 | 35 | 35 | 35 | 35 | 35 | 35 |
| | Oil | – | 10 | 10 | 10 | 10 | 10 | 10 | 10 | 10 | 10 | 10 |
| | Silica | – | 25 | 25 | 25 | 25 | 25 | 25 | 25 | 25 | 25 | 25 |
| | Silane coupling agent | – | 3 | 3 | 3 | 3 | 3 | 3 | 3 | 3 | 3 | 3 |
| | Antioxidant | – | 1.5 | 1.5 | 1.5 | 1.5 | 1.5 | 1.5 | 1.5 | 1.5 | 1.5 | 1.5 |
| | Stearic acid | – | 2 | 2 | 2 | 2 | 2 | 2 | 2 | 2 | 2 | 2 |
| | Zinc oxide | – | 2.5 | 2.5 | 2.5 | 2.5 | 2.5 | 2.5 | 2.5 | 2.5 | 2.5 | 2.5 |
| | Wax | – | 1 | 1 | 1 | 1 | 1 | 1 | 1 | 1 | 1 | 1 |
| | Sulfur | – | 1.5 | 1.5 | 1.5 | 1.5 | 15 | 15 | 15 | 15 | 15 | 15 |
| | Vulcanization accelerator (1) | – | 2 | 2 | 2 | 2 | 2 | 2 | 2 | 2 | 2 | 2 |
| | Vulcanization accelerator (2) | – | 1 | 1 | 1 | 1 | 1 | 1 | 1 | 1 | 1 | 1 |
| Evaluation | Carbon ratio (% by mass) | – | 58 | 58 | 58 | 58 | 58 | 58 | 58 | 58 | 58 | 58 |
| | Rubber tensile strength index | – | 100 | 82 | 86 | 145 | 161 | 162 | 124 | 120 | 80 | 75 |
| | Abrasion resistance index | – | 100 | 68 | 72 | 103 | 105 | 106 | 101 | 102 | 70 | 92 |
| | Fuel economy index | – | 100 | 98 | 99 | 100 | 101 | 111 | 102 | 103 | 103 | 105 |

The results in Table 6 demonstrate that in Examples B-1 to B-5 using rubber compositions each of which contained, per 100% by mass of the rubber component, 75% by mass or more of a hydrogenated styrene-butadiene copolymer having a degree of hydrogenation of 75 mol% or more, and further contained, relative to 100 parts by mass

of the rubber component, 3 parts by mass or more of carbon black and 1 to 200 parts by mass of silica, rubber tensile strength and abrasion resistance were well improved while maintaining or improving good fuel economy.

[Table 7]

| | | Degree of hydrogenation (mol%) | Comparative Example C-1 | Comparative Example C-2 | Comparative Example C-3 | Example C-1 | Example C-2 | Comparative Example C-4 | Example C-3 |
|---|---|---|---|---|---|---|---|---|---|
| Formulation (parts by mass) | Copolymer (C-1) | 0 | 55 | - | - | - | - | - | - |
| | Copolymer (C-2) | 0 | - | 100 | - | - | - | - | - |
| | Copolymer (C-3) | 60 | - | - | 100 | - | - | - | - |
| | Copolymer (C-4) | 80 | - | - | - | 100 | - | - | - |
| | Copolymer (C-5) | 95 | - | - | - | - | 100 | 55 | - |
| | Copolymer (C-6) | 95 | - | - | - | - | - | - | 100 |
| | Natural rubber | - | 20 | - | - | - | - | 20 | - |
| | Polybutadiene rubber | - | 25 | - | - | - | - | 25 | - |
| | Carbon black (1) | - | 5 | 5 | 5 | 5 | 5 | 5 | 5 |
| | Oil | - | 25 | 25 | 25 | 25 | 25 | 25 | 25 |
| | Silica | - | 75 | 75 | 75 | 75 | 75 | 75 | 75 |
| | Silane coupling agent | - | 6 | 6 | 6 | 6 | 6 | 6 | 6 |
| | Antioxidant | - | 1.5 | 1.5 | 1.5 | 1.5 | 1.5 | 1.5 | 1.5 |
| | Stearic acid | - | 2 | 2 | 2 | 2 | 2 | 2 | 2 |
| | Zinc oxide | - | 2.5 | 2.5 | 2.5 | 2.5 | 2.5 | 2.5 | 2.5 |
| | Wax | - | 1 | 1 | 1 | 1 | 1 | 1 | 1 |
| | Sulfur | - | 2 | 2 | 2 | 2 | 2 | 2 | 2 |
| | Vulcanization accelerator (1) | - | 1.8 | 1.8 | 1.8 | 1.8 | 1.8 | 1.8 | 1.8 |
| | Vulcanization accelerator (2) | - | 1.2 | 1.2 | 1.2 | 1.2 | 1.2 | 1.2 | 1.2 |
| Evaluation | tan δ peak temperature (°C) | - | -22 | -20 | -20 | -21 | -21 | -30 | -21 |
| | Rubber tensile strength index | - | 115 | 100 | 105 | 199 | 215 | 86 | 216 |
| | Abrasion resistance index | - | 112 | 100 | 105 | 121 | 137 | 112 | 138 |
| | Fuel economy index | - | 104 | 100 | 100 | 101 | 101 | 104 | 113 |
| | Ozone resistance | - | C4 | C3 | B3 | None | None | B3 | None |

The results in Table 7 demonstrate that in Examples C-1 to C-3 using rubber compositions each of which contained, per 100% by mass of the rubber component, 75% by mass or more of a hydrogenated styrene-butadiene copolymer having a degree of hydrogenation of 75 mol% or more, and further contained, relative to 100 parts by mass of the rubber component, 3 parts by mass or more of carbon black and 1 to 200 parts by mass of silica, rubber tensile

strength, abrasion resistance, and ozone resistance were well improved while maintaining or improving good fuel economy.

[Table 8]

| | | Degree of hydrogenation (mol%) | Comparative Example D-1 | Comparative Example D-2 | Comparative Example D-3 | Comparative Example D-4 | Example D-1 | Example D-2 | Example D-3 | Example D-4 | Comparative Example D-5 |
|---|---|---|---|---|---|---|---|---|---|---|---|
| Formulation (parts by mass) | Copolymer (1) | 0 | 85 | 100 | – | – | – | – | – | – | – |
| | Copolymer (2) | 60 | – | – | 100 | – | – | – | – | – | – |
| | Copolymer (3) | 80 | – | – | – | 100 | 100 | – | – | – | – |
| | Copolymer (4) | 95 | – | – | – | – | – | 100 | – | 90 | 70 |
| | Copolymer (5) | 95 | – | – | – | – | – | – | 100 | – | – |
| | Polybutadiene rubber | – | 15 | – | – | – | – | – | – | 10 | 30 |
| | Carbon black (1) | – | 5 | 5 | 5 | 1 | 5 | 5 | 5 | 5 | 5 |
| | Oil | – | 25 | 25 | 25 | 25 | 25 | 25 | 25 | 25 | 25 |
| | Silica | – | 75 | 75 | 75 | 75 | 75 | 75 | 75 | 75 | 75 |
| | Silane coupling agent | – | 6 | 6 | 6 | 6 | 6 | 6 | 6 | 6 | 6 |
| | Antioxidant | – | 1.5 | 1.5 | 1.5 | 1.5 | 1.5 | 1.5 | 1.5 | 1.5 | 1.5 |
| | Stearic acid | – | 2 | 2 | 2 | 2 | 2 | 2 | 2 | 2 | 2 |
| | Zinc oxide | – | 2.5 | 2.5 | 2.5 | 2.5 | 2.5 | 2.5 | 2.5 | 2.5 | 2.5 |
| | Wax | – | 1 | 1 | 1 | 1 | 1 | 1 | 1 | 1 | 1 |
| | Sulfur | – | 2 | 2 | 2 | 2 | 2 | 2 | 2 | 2 | 2 |
| | Vulcanization accelerator (1) | – | 1.8 | 1.8 | 1.8 | 1.8 | 1.8 | 1.8 | 1.8 | 1.8 | 1.8 |
| | Vulcanization accelerator (2) | – | 1.2 | 1.2 | 1.2 | 1.2 | 1.2 | 1.2 | 1.2 | 1.2 | 1.2 |
| Evaluation | tan δ peak temperature (°C) | – | -14 | -13 | -13 | -13 | -13 | -13 | -13 | -14 | -15 |
| | Rubber tensile strength index | – | 120 | 100 | 105 | 176 | 198 | 212 | 212 | 144 | 80 |
| | Abrasion resistance index | – | 110 | 100 | 105 | 114 | 124 | 138 | 138 | 132 | 118 |
| | Fuel economy index | – | 102 | 100 | 100 | 81 | 100 | 100 | 108 | 106 | 107 |
| | Ozone resistance | – | C4 | C3 | B3 | B2 | None | None | None | None | B2 |
| | Conductivity index | – | 100 | 100 | 100 | 95 | 100 | 100 | 100 | 100 | 100 |

The results in Table 8 demonstrate that in Examples D-1 to D-4 using rubber compositions each of which contained, per 100% by mass of the rubber component, 75% by mass or more of a hydrogenated styrene-butadiene copolymer having a degree of hydrogenation of 75 mol% or more, and further contained, relative to 100 parts by mass of the rubber component, 3 parts by mass or more of carbon black and 1 to 200 parts by mass of silica, rubber tensile

strength, abrasion resistance, and ozone resistance were well improved while maintaining or improving good fuel economy and good conductivity.

## Claims

1. A pneumatic tire, formed from a rubber composition, the rubber composition comprising:

    a hydrogenated styrene-butadiene copolymer obtained by copolymerization of an aromatic vinyl compound and a conjugated diene compound, the hydrogenated styrene-butadiene copolymer having a degree of hydrogenation of the conjugated diene units of 90 mol% or more, a weight average molecular weight of 200,000 to 2,000,000, and a styrene content of 5% to 40% by mass;
    carbon black; and
    silica,
    the rubber composition comprising, per 100% by mass of a rubber component, 75% by mass or more of the hydrogenated styrene-butadiene copolymer,
    the rubber composition comprising, relative to 100 parts by mass of the rubber component, 3 parts by mass or more of the carbon black and 1 to 200 parts by mass of the silica.

2. The pneumatic tire according to claim 1,
wherein the hydrogenated styrene-butadiene copolymer is a hydrogenated modified styrene-butadiene copolymer.

3. The pneumatic tire according to any one of claim 1 or 2,
wherein the hydrogenated styrene-butadiene copolymer is present in an amount of 90% to 100% by mass per 100% by mass of the rubber component.

4. The pneumatic tire according to any one of claims 1 to 3,
wherein the silica is present in an amount of 10 to 80 parts by mass relative to 100 parts by mass of the rubber component, and
the carbon black is present in an amount of 50% by mass or more per 100% by mass of the total filler.

5. The pneumatic tire according to any one of claims 1 to 4,
wherein the rubber composition has a tan $\delta$ peak temperature of lower than -16°C.

6. The pneumatic tire according to any one of claims 1 to 4,
wherein the rubber composition has a tan $\delta$ peak temperature of -16°C or higher.

7. The pneumatic tire according to claim 4,
wherein the pneumatic tire is a truck or bus tire comprising a tread formed from the rubber composition.

8. The pneumatic tire according to claim 5,
wherein the pneumatic tire is a studless winter tire comprising a tread formed from the rubber composition.

9. The pneumatic tire according to claim 5,
wherein the pneumatic tire is an all-season tire comprising a tread formed from the rubber composition.

10. The pneumatic tire according to claim 6,
wherein the pneumatic tire is a summer tire comprising a tread formed from the rubber composition.

## Patentansprüche

1. Luftreifen, gebildet aus einer Kautschukzusammensetzung, wobei die Kautschukzusammensetzung enthält:

    ein hydriertes, durch Copolymerisation einer aromatischen Vinylverbindung und einer konjugierten Dienverbindung erhaltenes Styrol-Butadien-Copolymer, wobei das hydrierte Styrol-Butadien-Copolymer einen Hydrierungsgrad der konjugierten Dieneinheiten von 90 Molprozent oder mehr, ein gewichtsmittleres Molekulargewicht von 200.000 bis 2.000.000 und einen Styrolgehalt von 5 bis 40 Massenprozent aufweist;

Ruß; und
Siliciumdioxid,
wobei die Kautschukzusammensetzung je 100 Massenprozent einer Kautschukkomponente 75 Massenprozent oder mehr des hydrierten Styrol-Butadien-Copolymers enthält,
wobei die Kautschukzusammensetzung, bezogen auf 100 Massenteile der Kautschukkomponente, 3 oder mehr Massenteile des Rußes und 1 bis 200 Massenteile des Siliciumdioxids enthält.

**2.** Luftreifen nach Anspruch 1, wobei das hydrierte Styrol-Butadien-Copolymer ein hydriertes modifiziertes Styrol-Butadien-Copolymer ist.

**3.** Luftreifen nach einem der Ansprüche 1 oder 2,
wobei das hydrierte Styrol-Butadien-Copolymer in einer Menge von 90 bis 100 Massenprozent je 100 Massenprozent der Kautschukkomponente vorhanden ist.

**4.** Luftreifen nach einem der Ansprüche 1 bis 3,

wobei das Siliciumdioxid, bezogen auf 100 Massenteile der Kautschukkomponente, in einer Menge von 10 bis 80 Massenteilen vorhanden ist, und
der Ruß in einer Menge von 50 oder mehr Massenprozent je 100 Massenprozent des gesamten Füllstoffes vorhanden ist.

**5.** Luftreifen nach einem der Ansprüche 1 bis 4,
wobei die Kautschukzusammensetzung eine tan-$\delta$-Peak-Temperatur unterhalb von -16 °C aufweist.

**6.** Luftreifen nach einem der Ansprüche 1 bis 4,
wobei die Kautschukzusammensetzung eine tan-$\delta$-Peak-Temperatur von -16 °C oder darüber aufweist.

**7.** Luftreifen nach Anspruch 4,
wobei der Luftreifen ein Lastwagen- oder Busreifen ist, der einen aus der Kautschukzusammensetzung gebildeten Laufstreifen enthält.

**8.** Luftreifen nach Anspruch 5,
wobei der Luftreifen ein spikeloser Winterreifen ist, der einen aus der Kautschukzusammensetzung gebildeten Laufstreifen enthält.

**9.** Luftreifen nach Anspruch 5,
wobei der Luftreifen ein Ganzjahresreifen ist, der einen aus der Kautschukzusammensetzung gebildeten Laufstreifen enthält.

**10.** Luftreifen nach Anspruch 6,
wobei der Luftreifen ein Sommerreifen ist, der einen aus der Kautschukzusammensetzung gebildeten Laufstreifen enthält.

## Revendications

**1.** Bandage pneumatique réalisé à partir d'une composition en caoutchouc, la composition en caoutchouc comprenant :

un copolymère styrène butadiène hydrogéné obtenu par copolymérisation d'un composé vinyl aromatique et d'un composé diène conjugué, le copolymère styrène butadiène hydrogéné ayant un degré d'hydrogénation des unités de diène conjuguées de 90 moles % ou plus, un poids moléculaire moyen pondéral de 200 000 à 2 000 000, et une teneur en styrène de 5 % à 40 % en masse ;
du noir de carbone ; et
de la silice,
la composition en caoutchouc comprenant, pour 100 % en masse d'un composant en caoutchouc, 75 % en masse ou plus de copolymère styrène butadiène hydrogéné,
la composition en caoutchouc comprenant, relativement à 100 parts en masse du composant en caoutchouc, 3 parts en masse ou plus du noir de carbone et 1 à 200 parts en masse de la silice.

2. Bandage pneumatique selon la revendication 1, dans lequel le copolymère styrène butadiène hydrogéné est un copolymère styrène butadiène modifié hydrogéné.

3. Bandage pneumatique selon l'une quelconque des revendications 1 ou 2, dans lequel le copolymère styrène butadiène hydrogéné est présent dans une quantité de 90 % à 100 % en masse pour 100 % en masse du composant en caoutchouc.

4. Bandage pneumatique selon l'une quelconque des revendications 1 à 3, dans lequel la silice est présente dans une quantité de 10 à 80 parts en masse relativement à 100 parts en masse du composant en caoutchouc, et le noir de carbone est présent dans une quantité de 50 % en masse ou plus pour 100 % en masse de l'agent de charge total.

5. Bandage pneumatique selon l'une quelconque des revendications 1 à 4, dans lequel la composition en caoutchouc a une température de pointe tan $\delta$ inférieure à -16 °C.

6. Bandage pneumatique selon l'une quelconque des revendications 1 à 4, dans lequel la composition en caoutchouc a une température de pointe tan $\delta$ de -16 °C ou plus.

7. Bandage pneumatique selon la revendication 4, dans lequel le bandage pneumatique est un pneumatique pour camion ou pour autobus comprenant une bande de roulement formée à partir de la composition en caoutchouc.

8. Bandage pneumatique selon la revendication 5, dans lequel le bandage pneumatique est un pneumatique divers sans crampons comprenant une bande de roulement formée à partir de la composition en caoutchouc.

9. Bandage pneumatique selon la revendication 5, dans lequel le bandage pneumatique est un pneumatique toutes saisons comprenant une bande de roulement formée à partir de la composition en caoutchouc.

10. Bandage pneumatique selon la revendication 6, dans lequel le bandage pneumatique est un pneumatique d'été comprenant une bande de roulement formée à partir de la composition en caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0775725 A1
- JP 2012102239 A
- JP 2011162654 A
- JP 2011153219 A
- US 2006173134 A
- JP 2000344955 A
- JP H1275605 A
- JP H5271326 A
- JP H5271325 A
- JP H5222115 A
- JP H11292924 A
- JP 2000037632 A
- JP S59133203 A
- JP 63005401 A
- JP S62218403 A
- JP H790017 A
- JP S4319960 B
- JP S4740473 B